# EUROPEAN PATENT SPECIFICATION

(11) **EP 3 805 079 B1**
(45) Date of publication and mention of the grant of the patent: **01.10.2025**
(21) Application number: 20200636.7
(22) Date of filing: 07.10.2020
(51) Int. Cl.: B62D 53/06, B62D 63/06, B60P 1/64

(54) **SPLIT TRAILER**
GETEILTER ANHÄNGER
REMORQUE DIVISÉES

(30) Priority: 08.10.2019 GB 201914523
(43) Date of publication of application: 14.04.2021
(73) Proprietor: Dennison Trailers Unlimited Company, Naas, Co. Kildare (IE)
(72) Inventor: Dennison, David, Sallins, County Kildare (IE); Lambe, Ronan, Castledermot, County Kildare (IE)
(74) Representative: Schütte, Gearoid

(56) References cited:
- EP-A1- 3 480 087
- US-A- 3 004 772
- US-A- 3 154 319
- US-A- 3 163 442
- US-A- 3 184 251
- US-A- 3 288 492
- US-A- 3 567 252

## Description

### Background

Split trailer semi-trailers have been proposed previously. For example, US 3288492 A, US 3567252 A, US 3004772 A, US 3154319 A, US 3163442 A and US 3184251 A all disclose split trailer types of semi-trailer having two cargo bodies which can be used separately or which can be locked together end to end to form a single composite semi-trailer. Wheeled bogies are slidable along a bottom of each cargo body. One bogie is positioned at a rear end of each cargo body when they are separated. Both bogies are positioned together at a rear end of the rearmost cargo body when the two cargo bodies are locked together end to end. That is, when connected together, the bogie on the front cargo body slides onto the rear cargo body against the bogie already positioned at a rear end of the rear cargo body.

The present invention is directed towards providing an improved split trailer type of semi-trailer.

### Statements of Invention

According to the invention, there is provided a split trailer type of semi-trailer, including two associated trailer parts which can be interlocked to form a single trailer or can be separated to form two individual trailers, locking means being provided to releasably lock the two trailer parts together for interlocking the two trailer parts, each trailer part having a wheeled chassis and a kingpin for attachment to a tractor vehicle, each trailer part having a chassis frame and a wheeled bogey slidably mounted on the chassis frame for movement between a rearward position on the chassis frame and a forward position on the chassis frame, characterised in that the two trailer parts are slidably interengagable, each trailer part having a front end which is slidably engageable within a rear end of the other trailer part for interlocking the two trailer parts. According to the invention, the two trailer parts are similar and interchangeable.

In another embodiment, a pair of opposed inwardly open slide channels are provided at the rear end of each trailer part for reception of the front end of the other trailer part.

In another embodiment, the chassis frame comprises a pair of spaced-apart longitudinal I-beams, each having an upright web extending between a top flange and a bottom flange, a slide rail being mounted on an inside face of each web between the top flange and the bottom flange, and parallel to the top flange to form the slide channel between the top flange, the web and the slide rail.

In another embodiment, the chassis frame is mounted on top of the bogey, rollers on the chassis frame engaging a top of the bogey and rollers on the bogey engaging an underside of the chassis frame.

In another embodiment, two longitudinally spaced-apart pairs of rollers are provided on the chassis frame and a pair of rollers is mounted at a front end of the bogey.

In another embodiment, a pair of axles are provided on the bogey, comprising a front axle and a rear axle, the front axle being a lift axle which is movable on the bogey between a lowered wheel ground-engaging operating position and a raised inoperative position.

In another embodiment, the rear axle is a steer axle.

In another embodiment, the rear axle is a self-track axle.

In another embodiment, the wheeled bogie is slidably movable on the chassis frame between a rearward position at a rear end of the chassis frame and a forward position centrally on the chassis frame.

In another embodiment, a pair of retractable stands are mounted at a front end of the

In another embodiment, a pair of retractable stands are mounted at a front end of the wheeled bogie.

In another embodiment, the chassis frame has a front bolster with twistlocks at an inner end of a front engagement portion of the chassis frame and a rear bolster with twistlocks at a rear end of the chassis frame, said bolsters abutting upon interlocking of the trailer parts.

### Brief Description of the Drawings

The invention will be more clearly understood by the following description of some embodiments thereof, given by way of example only, with reference to the accompanying drawings, in which:
Fig. 1 is a perspective view of a split trailer type of semi-trailer according to the invention;
Fig. 2 is a perspective view of the split trailer, shown in another position of use;
Fig. 3 is a detail perspective view of a trailer part forming portion of the split trailer; and
Fig. 4 is a detail perspective view, similar to Fig. 3, showing the trailer part in another position of use.

### Detailed Description of the Preferred Embodiments

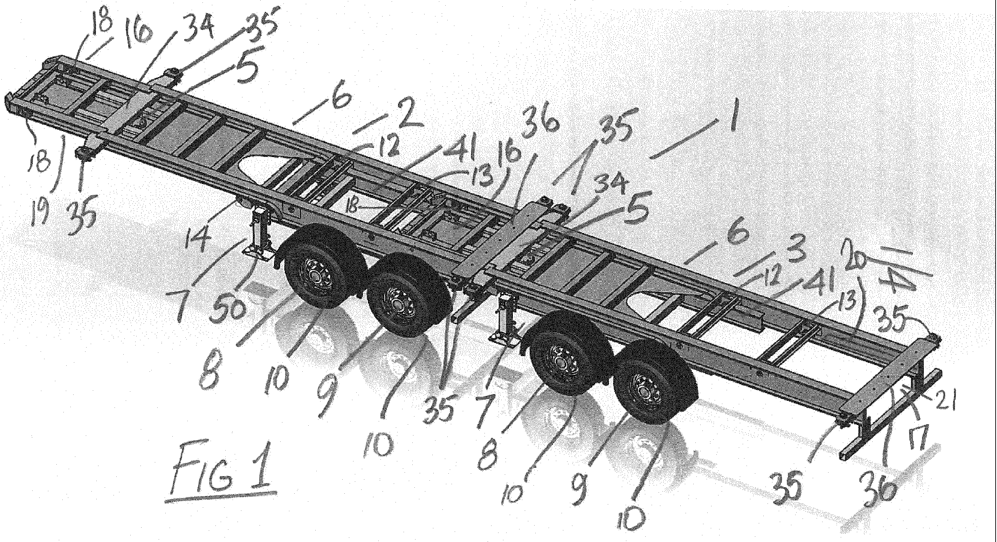

Referring to the drawings, there is illustrated a split trailer type of semi-trailer according to the invention, indicated generally by the reference numeral 1. The split trailer 1 includes two associated trailer parts 2, 3 which can be interlocked, as shown in Fig. 1, to form the split trailer 1, or can be separated to form two individual trailers 2, 3. It will be noted that the two trailer parts 2, 3 are identical and can be connected together to form the split trailer 1 with either of the two trailer parts 2, 3 in front or behind the other.

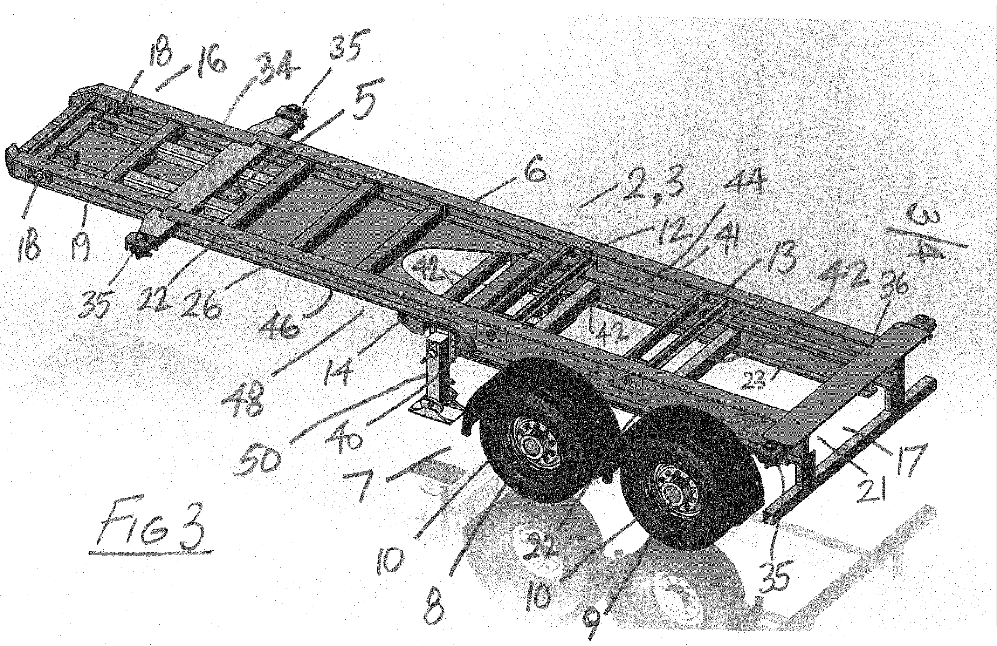

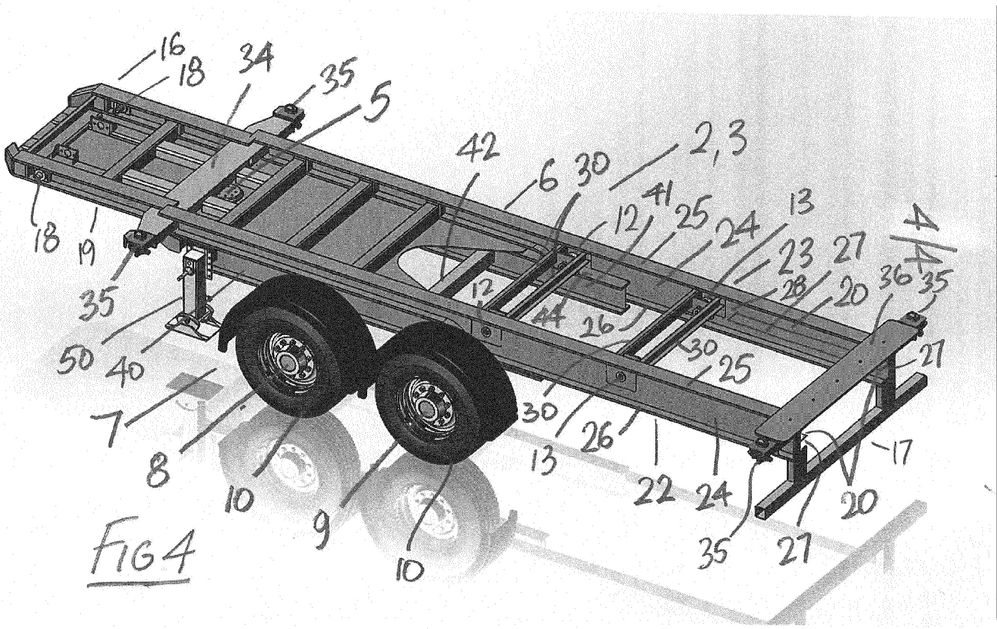

Each trailer part 2, 3 comprises a wheeled chassis and a kingpin 5 for attachment to a tractor vehicle in the usual way. The wheeled chassis comprises an elongate chassis frame 6 and a wheeled bogey 7 slidably mounted on the chassis frame 6 for movement between a rearward position on the chassis frame 6, at a rear end of the chassis frame 6 as shown in Fig. 3, and a forward position on the chassis frame 6, centrally on the chassis frame 6 as shown in Fig. 4.

A pair of axles are provided on each bogey 7, comprising a front axle 8 and a rear axle 9, each axle 8, 9 carrying wheels 10. The front axle 8 is a lift axle which is vertically movable on the bogey 7 between a lowered wheel ground-engaging operating position and a raised inoperative position on the bogey 7. If desired, the rear axle 9 may be a fixed axle, a steer axle or a self-track axle.

The chassis frame 6 is mounted on top of the bogey 7. Two longitudinally spaced-apart pairs of rollers 12, 13 are provided on the chassis frame 6 engaging a top of the bogey 7 and a pair of rollers 14 is mounted at a front end of the bogey 7 engaging an underside of the chassis frame 6.

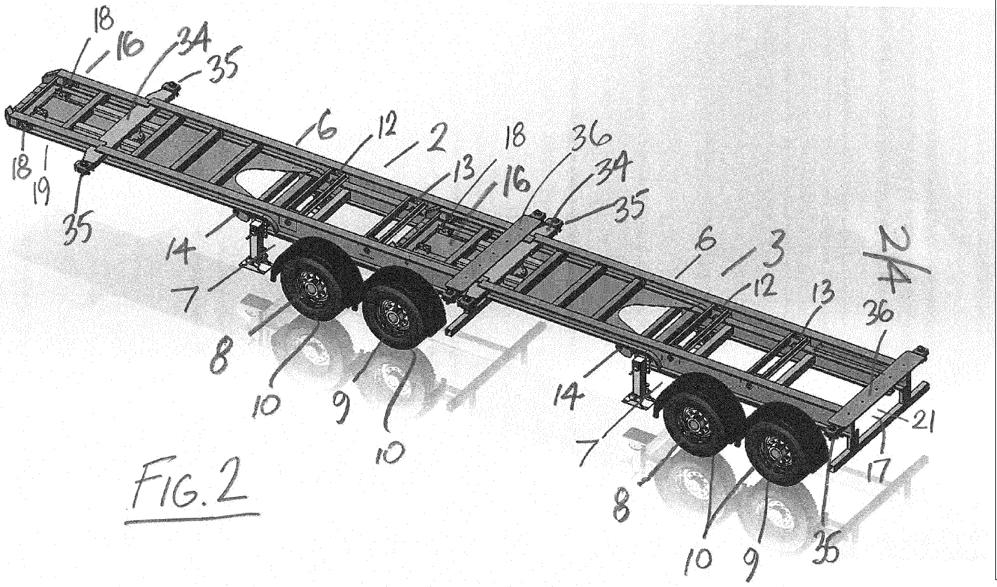

Each trailer part 2, 3 has a front end 16 having a front engagement portion 19 which is slidably engageable within a complementary receiver 21 at a rear end 17 of the other trailer part 2, 3 for nesting the front end 16 of the rearmost trailer part 3 within the rear end 17 of the foremost trailer part 2. Locking pins 18 at the front end 16 are laterally movable, by rams for example, for engagement with complementary receiver slots (not shown) on the chassis frame 6 of the foremost trailer part 2, when the two trailer parts 2, 3 are interlocked as shown in Fig. 1 and Fig. 2.

Referring in particular to Fig. 4, a pair of opposed inwardly open slide channels 20 are provided at the rear end 17 of each trailer part 2, 3 for reception of the front end 16 of the other trailer part 2, 3. The chassis frame 6 comprises a pair of spaced-apart longitudinal I-beams 22, 23, each having an upright web 24 extending between a top flange 25 and a bottom flange 26. A slide rail 27 is mounted on an inside face 28 of each web 24 between the top flange 25 and the bottom flange 26 and parallel to the top flange 25 to form the slide channel 20 between the top flange 25, the web 24 and the slide rail 27.

The rollers 12, 13 are mounted at the inside faces 28 of each web 24 and supported by cross members 30 extending between the webs 24.

A front bolster 34 carrying twist locks 35 is mounted adjacent the front end 16 of the chassis frame 6 and a rear bolster 36 with twist locks 35 is mounted at a rear end of the chassis frame 6. It will be noted that upon engagement of the two trailer parts 2, 3 the front engagement portion 19 at the front end 16 of the rearmost trailer part 3 is inserted into the associated receiver 21 at the rear end 17 of the foremost trailer part 2 until the front bolster 34 of the rearmost trailer part 3 abuts the rear bolster 36 of the foremost trailer part 2.

The bogey 7 comprises a pair of spaced-apart longitudinal I-beams 40, 41 interconnected by crossbeams 42. The rollers 12, 13 run on upper flanges 44 of each I-beam 40, 41 of the bogey 7. The rollers 14 at a front end of the bogey 7 run along a bottom face 46 of the bottom flange 26 of the I-beams 22, 23 forming the chassis frame 6. In this regard, it will be noted that a front portion of each web 24 of the I-beams 22, 23 is shallower than a rear portion of the web 24 forming a groove 48 (Fig. 3) along which the rollers 14 run. Height adjustable stands 50 are mounted at a front end of the bogey 7 on each I-beam 40, 41 outside a crossbeam 42.

In use, when the two trailer parts 2, 3 are interlocked, as shown in Fig. 1, the split trailer 1 can be used for carrying a 40 foot container box or two 20 foot container boxes. Alternatively, the trailer parts 2, 3 can be separated and each trailer part 2, 3 used independently of each other for carrying 20 foot container boxes.

Fig. 2 shows initial interconnection of the two trailer parts 2, 3 by insertion of the front end 16 of the rearmost trailer part 3 into the rear end 17 of the foremost trailer part 2. The rearmost bogey 7, that is the bogey 7 on the rearmost trailer part 3 is then slid forwardly on the rearmost trailer part 3 into the forward position, as shown in Fig. 1. Thus, all the axles 8, 9 are brought together. The front axle 8 on the front trailer part 2 is then lifted clear of the ground so that the split trailer 1 is supported on the rear axle 9 of the front trailer part 2 and the two axles 8, 9 on the rear trailer part 3.

It will be appreciated that the coupling mechanism between the two trailer parts 2, 3 is relatively simple in construction which facilitates easy, reliable and rapid interconnection and release of the two trailer parts 2, 3.

The terms "comprise" and "include", and any variations thereof required for grammatical reasons, are to be considered as interchangeable and accorded the widest possible interpretation.

The invention is not limited to the embodiments hereinbefore described which may be varied in both construction and detail within the scope of the appended claims.

## Claims

1. A split trailer (1) type of semi-trailer, including two associated trailer parts (2, 3) which can be interlocked to form a single trailer or can be separated to form two individual trailers, locking means being provided to releasably lock the two trailer parts (2, 3) together for interlocking the two trailer parts (2, 3), each trailer part (2, 3) having a wheeled chassis (6) and a kingpin (5) for attachment to a tractor vehicle, the two trailer parts (2, 3) being similar and interchangeable, and each trailer part (2, 3) having a chassis frame (6) and a wheeled bogey (7) slidably mounted on the chassis frame (6) for movement between a rearward position on the chassis frame (6) and a forward position on the chassis frame (6), **characterised in that** the two trailer parts (2, 3) are slidably interengagable, each trailer part (2, 3) having a front end (16) which is slidably engageable within a rear end (17) of the other trailer part (2, 3) for interlocking the two trailer parts (2, 3).

2. The split trailer (1) as claimed in claim 1, wherein a pair of opposed inwardly open slide channels (20) are provided at the rear end (17) of each trailer part (2, 3) for reception of the front end (16) of the other trailer part (2, 3).

3. The split trailer (1) as claimed in claim 2, wherein the chassis frame (6) comprises a pair of spaced-apart longitudinal I-beams (22, 23), each having an upright web (24) extending between a top flange (25) and a bottom flange (26), a slide rail (27) being mounted on an inside face of each web (24) between the top flange (25) and the bottom flange (26), and parallel to the top flange (25) to form the slide channel (20) between the top flange (25), the web (24) and the slide rail (27).

4. The split trailer (1) as claimed in any preceding claim, wherein the chassis frame (6) is mounted on top of the bogey (7), rollers (12, 13) on the chassis frame (6) engaging a top of the bogey (7) and rollers (14) on the bogey (7) engaging an underside of the chassis frame (6).

5. The split trailer (1) as claimed in claim 4, wherein two spaced-apart pairs of rollers (12, 13) are provided on the chassis frame (6) and a pair of rollers (14) is mounted at a front end of the bogey (7).

6. The split trailer (1) as claimed in any preceding claim, wherein a pair of axles (8, 9) are provided on the bogey (7), comprising a front axle (8) and a rear axle (9), the front axle (8) being a lift axle which is movable on the bogey (7) between a lowered wheel (10) ground-engaging operating position and a raised inoperative position.

7. The split trailer (1) as claimed in claim 6, wherein the rear axle (9) is a steer axle.

8. The split trailer (1) as claimed in claim 6, wherein the rear axle (9) is a self-track axle.

9. The split trailer (1) as claimed in any preceding claim, wherein the wheeled bogie (7) is slidably movable on the chassis frame (6) between a rearward position at a rear end of the chassis frame (6) and a forward position centrally on the chassis frame (6).

10. The split trailer (1) as claimed in any preceding claim, wherein a pair of retractable stands (50) are mounted at a front end of the wheeled bogie (7).

11. The split trailer (1) as claimed in any preceding claim, wherein the chassis frame (6) has a front bolster (34) with twistlocks (35) at an inner end of a front engagement portion (19) of the chassis frame (6) and a rear bolster (36) with twistlocks (35) at a rear end of the chassis frame (6), said bolsters (34, 36) abutting upon interlocking of the trailer parts (2, 3).

## Patentansprüche

1. Sattelanhänger von der Art eines geteilten Anhängers (1), der zwei verknüpfte Anhängerteile (2, 3) einschließt, die miteinander verriegelt werden können, um einen einzelnen Anhänger auszubilden, oder getrennt werden können, um zwei einzelne Anhänger auszubilden, wobei Verriegelungsmittel bereitgestellt sind, um die zwei Anhängerteile (2, 3) zum Verriegeln der zwei Anhängerteile (2, 3) lösbar miteinander zu verriegeln, wobei jedes Anhängerteil (2, 3) ein Fahrgestell (6) mit Rädern und einen Lenkzapfen (5) für eine Befestigung an einem Zugfahrzeug aufweist, wobei die zwei Anhängerteile (2, 3) ähnlich und austauschbar sind, und wobei jedes Anhängerteil (2, 3) einen Fahrgestellrahmen (6) und ein Drehgestell (7) mit Rädern aufweist, das auf dem Fahrgestellrahmen (6) für eine Bewegung zwischen einer Rückwärtsposition auf dem Fahrgestellrahmen (6) und einer Vorwärtsposition auf dem Fahrgestellrahmen (6) gleitend montiert ist, **dadurch gekennzeichnet, dass** die zwei Anhängerteile (2, 3) gleitend in Eingriff bringbar sind, wobei jedes Anhängerteil (2, 3) ein vorderes Ende (16) aufweist, das innerhalb eines hinteren Endes (17) des anderen Anhängerteils (2, 3) zum Verriegeln der zwei Anhängerteile (2, 3) gleitend in Eingriff bringbar ist.

2. Geteilter Anhänger (1) nach Anspruch 1, wobei an dem hinteren Ende (17) jedes Anhängerteils (2, 3) ein Paar gegenüberliegender nach innen offener Gleitkanäle (20) für eine Aufnahme des vorderen Endes (16) des anderen Anhängerteils (2, 3) bereitgestellt ist.

3. Geteilter Anhänger (1) nach Anspruch 2, wobei der Fahrgestellrahmen (6) ein Paar voneinander beabstandeter längs verlaufender I-Träger (22, 23) umfasst, die jeweils einen aufrechten Steg (24) aufweisen, der sich zwischen einem oberen Flansch (25) und einem unteren Flansch (26) erstreckt, wobei eine Gleitschiene (27) an einer Innenseite jedes Stegs (24) zwischen dem oberen Flansch (25) und dem unteren Flansch (26) und parallel zu dem oberen Flansch (25) montiert ist, um den Gleitkanal (20) zwischen dem oberen Flansch (25), dem Steg (24) und der Gleitschiene (27) auszubilden.

4. Geteilter Anhänger (1) nach einem der vorstehenden Ansprüche, wobei der Fahrgestellrahmen (6) auf dem Drehgestell (7) montiert ist, wobei Rollen (12, 13) auf dem Fahrgestellrahmen (6) mit einer Oberseite des Drehgestells (7) in Eingriff stehen und Rollen (14) auf dem Drehgestell (7) mit einer Unterseite des Fahrgestellrahmens (6) in Eingriff stehen.

5. Geteilter Anhänger (1) nach Anspruch 4, wobei zwei voneinander beabstandete Rollenpaare (12, 13) auf dem Fahrgestellrahmen (6) bereitgestellt sind und ein Rollenpaar (14) an einem vorderen Ende des Drehgestells (7) montiert ist.

6. Geteilter Anhänger (1) nach einem der vorstehenden Ansprüche, wobei an dem Drehgestell (7) ein Paar Achsen (8, 9) bereitgestellt ist, umfassend eine Vorderachse (8) und eine Hinterachse (9), wobei die Vorderachse (8) eine Liftachse ist, die an dem Drehgestell (7) zwischen einer abgesenkten Betriebsposition mit in den Boden eingreifendem Rad (10) und einer angehobenen Ruheposition bewegbar ist.

7. Geteilter Anhänger (1) nach Anspruch 6, wobei die Hinterachse (9) eine Lenkachse ist.

8. Geteilter Anhänger (1) nach Anspruch 6, wobei die Hinterachse (9) eine Selbstspurachse ist.

9. Geteilter Anhänger (1) nach einem der vorstehenden Ansprüche, wobei das Fahrgestell (7) mit Rädern auf dem Fahrgestellrahmen (6) zwischen einer Rückwärtsposition an einem hinteren Ende des Fahrgestellrahmens (6) und einer Vorwärtsposition mittig auf dem Fahrgestellrahmen (6) gleitend bewegbar ist.

10. Geteilter Anhänger (1) nach einem der vorstehenden Ansprüche, wobei ein Paar einziehbarer Ständer (50) an einem vorderen Ende des Fahrgestells (7) mit Rädern montiert ist.

11. Geteilter Anhänger (1) nach einem der vorstehenden Ansprüche, wobei der Fahrgestellrahmen (6) ein vorderes Polster (34) mit Drehverriegelungen (35) an einem inneren Ende eines vorderen Eingriffsabschnitts (19) des Fahrgestellrahmens (6) und ein hinteres Polster (36) mit Drehverriegelungen (35) an einem hinteren Ende des Fahrgestellrahmens (6) aufweist, wobei die Polster (34, 36) bei dem Verriegeln der Anhängerteile (2, 3) aneinanderstoßen.

## Revendications

1. Semi-remorque de type remorque divisée (1), comportant deux parties de remorque (2, 3) associées qui peuvent être interverrouillées pour former une seule remorque ou qui peuvent être séparées pour former deux remorques individuelles, des moyens de verrouillage étant prévus pour verrouiller de manière amovible les deux parties de remorque (2, 3) ensemble pour l'interverrouillage des deux parties de remorque (2, 3), chaque partie de remorque (2, 3) ayant un châssis à roues (6) et un pivot d'attelage (5) pour la fixation à un véhicule tracteur, les deux parties de remorque (2, 3) étant similaires et interchangeables, et chaque partie de remorque (2, 3) ayant un cadre de châssis (6) et un bogie à roues (7) monté de manière coulissante sur le cadre de châssis (6) pour se déplacer entre une position arrière sur le cadre de châssis (6) et une position avant sur le cadre de châssis (6), **caractérisée en ce que** les deux parties de remorque (2, 3) peuvent venir en prise de manière coulissante, chaque partie de remorque (2, 3) ayant une extrémité avant (16) qui peut venir en prise de manière coulissante dans une extrémité arrière (17) de l'autre partie de remorque (2, 3) pour l'interverrouillage des deux parties de remorque (2, 3).

2. Remorque divisée (1) selon la revendication 1, dans laquelle une paire de canaux de glissement (20) opposés ouverts vers l'intérieur est prévue à l'extrémité arrière (17) de chaque partie de remorque (2, 3) pour la réception de l'extrémité avant (16) de l'autre partie de remorque (2, 3).

3. Remorque divisée (1) selon la revendication 2, dans laquelle le cadre de châssis (6) comprend une paire de poutres en I longitudinales (22, 23) espacées, chacune ayant une âme (24) droite s'étendant entre une aile supérieure (25) et une aile inférieure (26), une glissière (27) étant montée sur une face intérieure de chaque âme (24) entre l'aile supérieure (25) et l'aile inférieure (26), et parallèlement à l'aile supérieure (25) pour former le canal de glissement (20) entre l'aile supérieure (25), l'âme (24) et la glissière (27).

4. Remorque divisée (1) selon l'une quelconque revendication précédente, dans laquelle le cadre de châssis (6) est monté sur le dessus du bogie (7), des rouleaux (12, 13) sur le cadre de châssis (6) venant en prise avec le dessus du bogie (7) et des rouleaux (14) sur le bogie (7) venant en prise avec la face inférieure du cadre de châssis (6).

5. Remorque divisée (1) selon la revendication 4, dans laquelle deux paires de rouleaux (12, 13) espacées sont prévus sur le cadre de châssis (6) et une paire de rouleaux (14) est montée à une extrémité avant du bogie (7).

6. Remorque divisée (1) selon l'une quelconque revendication précédente, dans laquelle une paire d'essieux (8, 9) est prévue sur le bogie (7), comprenant un essieu avant (8) et un essieu arrière (9), l'essieu avant (8) étant un essieu de levage qui peut être déplacé sur le bogie (7) entre une position de fonctionnement avec mise en prise avec le sol de la roue abaissée (10) et une position de non-fonctionnement relevée.

7. Remorque divisée (1) selon la revendication 6, dans laquelle l'essieu arrière (9) est un essieu directeur.

8. Remorque divisée (1) selon la revendication 6, dans laquelle l'essieu arrière (9) est un essieu autovireur.

9. Remorque divisée (1) selon l'une quelconque revendication précédente, dans laquelle le bogie à roues (7) peut se déplacer de manière coulissante sur le cadre de châssis (6) entre une position arrière à une extrémité arrière du cadre de châssis (6) et une position avant au centre du cadre de châssis (6).

10. Remorque divisée (1) selon l'une quelconque revendication précédente, dans laquelle une paire de béquilles rétractables (50) est montée à une extrémité avant du bogie à roues (7).

11. Remorque divisée (1) selon l'une quelconque revendication précédente, dans laquelle le cadre de châssis (6) a une traverse avant (34) avec des verrous tournants (35) à une extrémité intérieure d'une partie de mise en prise avant (19) du cadre de châssis (6) et une traverse arrière (36) avec des verrous tournants (35) à une extrémité arrière du cadre de châssis (6), lesdites traverses (34, 36) venant en butée lors de l'interverrouillage des parties de remorque (2, 3).
